# EUROPÄISCHE PATENTSCHRIFT

(11) **EP 3 141 776 B1**
(45) Veröffentlichungstag und Bekanntmachung des Hinweises auf die Patenterteilung: **23.08.2023**
(21) Anmeldenummer: 16001934.5
(22) Anmeldetag: 05.09.2016
(51) Int. Cl.: F16G 13/06, B62M 9/00

(54) **ROLLENKETTEN-INNENLASCHE**
ROLE CHAIN INTERNAL TAB
ATTACHE INTERIEURE POUR CHAINE A ROULEAUX

(30) Priorität: 09.09.2015 DE 102015011500; 12.08.2016 DE 102016009814
(43) Veröffentlichungstag der Anmeldung: 15.03.2017
(73) Patentinhaber: SRAM Deutschland GmbH, 97424 Schweinfurt (DE)
(72) Erfinder: Nunes dos Santos, Pedro Miguel, 3040-87 Coimbra (PT); Ribeiro, Bruno Miguel Ferreira da Silva, 3700-424 Arrifana VFR, Aveiro (PT)

(56) Entgegenhaltungen:
- EP-A2- 2 535 616
- CN-Y- 201 155 544
- DE-T2- 69 705 008
- DE-U1- 20 212 596
- DE-U1-202010 008 814
- US-B2- 7 473 198

## Beschreibung

Die vorliegende Erfindung betrifft eine Antriebskette für Fahrräder mit verbessertem Verschleißverhalten, die mit einem Mehrfachritzel mit großer Ganganzahl an einem Hinterrad zusammenwirkt.

Antriebsketten für Fahrräder mit Kettenschaltung setzen sich aus zueinander schwenkbar angeordneten Kettengliedern zusammen, mit deren Hilfe eine geschlossene Kettenschleife zur Antriebskraftübertragung ausgebildet wird. Diese Kettenglieder sind zueinander um Kettenbolzen relativ zueinander drehbar, wobei die Kettenbolzen von Lochungen aufgenommen werden, die sich zentral in den zwei runden Endbereichen jeder Kettenlasche befinden. Die zwei Endbereiche jeder Kettenlasche sind durch einen Verbindungsbereich mit meistens tailliert ausgebildeter Außenkontur miteinander verbunden. Die Kettenglieder weisen entweder ein Paar Innenlaschen oder ein Paar Außenlaschen auf. Die Innenlaschen haben an ihrer Innenseite Kragen, wobei auf einem Paar spiegelbildlich zueinander angeordneter Kragen jeweils eine Kettenrolle drehbar angeordnet ist. In die Zwischenräume zwischen den Laschen-Paaren können die Zähne der Kettenräder eingreifen.

Dieser Eingriffsvorgang findet sowohl beim Antriebsfall statt, bei dem die Kette mit Zähnen an einem einzigen Kettenrad in Eingriff kommt, als auch beim Umlegen der Kette beim Umschalten von einem Kettenrad auf das benachbarte Kettenrad. Für die Erfüllung dieser Eingriffs-Funktionen besteht das Bestreben, die Zwischenräume zwischen den Laschen-Paaren möglichst groß in Richtung senkrecht zur Innenseite der Laschen zu gestalten. An den enger zusammenstehenden Innenlaschen helfen Fasen, einen Einlauftrichter für die in die Zwischenräume eintretenden Zähne des Kettenrades zu schaffen.

Bei der Weiterentwicklung von Kettenschaltsystemen für Fahrräder, die aus vorderem Kettenrad, Rollenkette, hinterem Mehrfachritzel und zugehörigen Umlege-Einrichtungen bestehen, hat sich die Anzahl der Ritzel am Mehrfachritzel schrittweise immer weiter erhöht. Damit einhergegangen sind Veränderungen der Abmessungen von Ritzeln, Kettenlaschen, Kettenbolzen und Kettenrollen, vor allem der Abmessungen in der Richtung parallel zur Längsachse der Kettenbolzen. Damit wird die Kette an die in immer geringeren axialen Abstand zueinander an der Hinterradnabe platzierten hinteren Ritzel angepasst. Dabei ist klar, dass die in axialer Richtung über die Außenseite der Kette vorstehenden Bestandteile der Kette auch hinderlich sind, weil sie ungewollt und störend in Kontakt mit Bestandteilen des benachbarten Ritzels geraten können.

Eine Reduzierung der Abmessungen der Bestandteile der Kette führt dabei zu einer Erhöhung der Belastungen für die Kette, zum Beispiel der Flächenpressung an den kürzer gewordenen Kettenbolzen. Damit einher geht eine Zunahme des Verschleißes, dem zum Beispiel mit der Nutzung von härteren Materialien oder durch das Vorsehen einer verschleißfesteren Oberflächenbeschichtung oder mittels einer Härtung der Oberfläche entgegengewirkt wird.

Die einseitige Erhöhung der Oberflächenhärte der Kettenbestandteile beim System Kette/Kettenrad allein auf der Seite der Kette führt dabei zu einem schnelleren Verschleißen auf der Seite der Kettenräder beziehungsweise der Ritzel.

In der EP 1 522 490 A2 sind Fasen hin zur Außenkontur der Laschen gezeigt, die die Geräuschentwicklung beim Austreten der Ritzelzähne aus den Laschenzwischenräumen vermindern sollen. Es wird beschrieben, dass dann Geräusche entstehen, wenn die Zahnspitze oder eine Kante an der Zahnspitze über Kanten an der Außenkontur der Kettenlaschen gleiten. Dieses Abgleiten findet statt beim Außer-Eingriff-Kommen von Kettenlasche und Ritzelzahn, und zwar im normalen Antriebfall ohne Gangwechsel bei der schräg von Mehrfachritzel weg verlaufenden Kette, und auch beim Vorgang eines Gangwechsels, wenn sich der von einem Kettenrad zum benachbarten Kettenrad verlaufende Wechselabschnitt der Kette nach radial außen von der Verzahnung entfernt. Das findet statt beim Einlaufen des Wechselabschnitts der Kette vom hinteren Ritzel in den Zugtrum der Kette und beim Übergang des Wechselabschnitts der Kette vom vorderen Kettenrad in den Leertrum der Kette.

Dieser Ansatz zum Reduzieren von Geräuschen ist auch verwirklicht worden bei den konstruktiven Lösungen, die gezeigt sind in der DE 10 2014 215 928 und in der DE 10 2014 215 960.

In der Patentschrift US 4,642,078 wird eine Antriebskette gezeigt, die besonders schmal ausgebildet ist und sich für ein Mehrfachritzel an einer Hinterradnabe mit hoher Gangzahl eignet. Die gezeigte Antriebskette verfügt über ausgebauchte Innenlaschen und ebene Außenlaschen.

Die Innenseite des Verbindungsbereiches der Innenlaschen weist gegenüber der Kontaktfläche zwischen Kettenrolle und Innenseite der Innenlasche einen Versatz nach außen auf, der bei Beibehaltung der Materialdicke der Innenlasche ebenso an der Außenseite am Verbindungsbereich der Innenlaschen in Erscheinung tritt. Ausgehend von der äußeren Kontur des Verbindungsbereiches der Innenlaschen liegt eine Ausbauchung nach außen vor, die eine trichterförmige Öffnung für das Eintreten der Zähne des Ritzels beziehungsweise Kettenrades bildet. Die lichte Weite zwischen den Laschen des Innenlaschenpaares ist insgesamt durch den genannten Versatz erhöht. Damit sind für das Eintreten eines Zahnes in den Innenlaschen-Zwischenraum günstige Voraussetzungen geschaffen worden.

In der EP 2 535 616 ist die Lösung aus der US 4,642,078 weiterentwickelt worden, indem die Außenseite am Verbindungsbereich der Innenlasche eben ausgebildet ist. Damit ergibt sich am Verbindungsbereich der Innenlasche eine geringere Materialdicke im Vergleich zu den runden Endbereichen der Innenlasche. Eine reduzierte Materialdicke am Verbindungsbereich der Innenlasche ist auch schon in der DE 197 05 018 verwirklicht.

Es sind bei Mehrfachritzeln mit einer weiter erhöhten Anzahl von Ritzeln somit Maßnahmen zu ergreifen, um ein sicheres Eingreifen der Ritzelzähne in den Zwischenraum zwischen einem Paar von Innenlaschen zu erreichen beziehungsweise zu erhalten. Zu diesen Maßnahmen gehört Reduzierung der Abmessungen, zum Beispiel eine Verkürzung der Länge von Kettenbolzen und Kettenrollen, die zu einer Erhöhung der Bauteil-Belastungen und zu einem erhöhten Verschleiß führen.

Aus der EP2 535 616 ist eine Ketteninnenlasche nach dem Oberbegriff des Anspruchs 1 bekannt. Aus der CN 201 155 544 Y ist eine Ketteninnenlasche nach dem Oberbegriff des Anspruchs 6 bekannt.

Es ist somit Ziel der vorliegenden Erfindung, den für Mehrfachritzel mit einer weiter erhöhten Anzahl von Ritzeln, ein sicheres Eingreifen der Ritzelzähne in den Zwischenraum zwischen einem Paar von Innenlaschen zu erreichen beziehungsweise zu erhalten und außerdem den zu erwartenden höheren Verschleiß in Grenzen zu halten.

In einer vorteilhaften Weiterbildung der Erfindung wird außerdem erreicht, dass keine Bestandteile der Enden der Kettenbolzen über die Außenseite der Außenlaschen vorstehen und Ansatzpunkte für einen nicht gewollten Kontakt zwischen Bolzenende und Ritzelzahn am Nachbar-Ritzel bieten.

Ein Eingreifen der Ritzelzähne in den Zwischenraum zwischen einem Paar von Innenlaschen findet auch in den Außenlaschen-Kettengliedern statt, in denen ein Paar von Außenlaschen die Verbindung zwischen in Kettenlängs-Richtung benachbarten Kettenbolzen herstellt. Dort wirken die über die Kettenrollen vorstehenden Innenlaschen mit den Ritzelzähnen zusammen, allerdings erst dann, wenn sich der jeweilige Ritzelzahn mit seiner Außenkontur schon weit radial in den Zwischenraum zwischen den Kettenlaschen hinein bewegt und sich der entsprechenden Kettenrolle genähert hat.

Dabei kommt es zu einem Kontakt zwischen Innenlaschen und Ritzelzahn. Dieser Kontakt führt zwangsläufig zu Verschleiß, vorrangig am Ritzelzahn, dessen Material in der Regel weicher ist, als das Material der Kettenlaschen.

Dieser Verschleiß erhöht sich, wenn die vom Ritzel weg ein- oder auslaufende Kette einen größeren Schrägungswinkel im Verhältnis zur Ebene des Kettenrades einnimmt.

Die Abschrägungen und Fasen an den Innenlaschen der Kettenlaschen sind vorgesehen, damit Ritzelzahn und Kette gut in Eingriff kommen. Sie bilden trichterförmige "Passagen" an der Kette für den Ein- und Austritt der Zahnspitzen. Diese "Passagen" werden sowohl beim Umlegen der Kette von kleineren zum größeren Ritzel, als auch beim Umlegen der Kette vom größeren zum kleineren Ritzel wirksam. Ihre konstruktive Gestaltung spielt eine große Rolle in Hinsicht auf den Verschleiß.

Die erfindungsgemäßen Abschrägungen und Fasen gehen weit über das hinaus, was als Fase in einem Winkel von 36 bis 41 Grad, besonders bevorzugt 38 Grad zum Brechen einer scharfen Kante an einem Massivteil oder an einem Blechteil wie einer Kettenlasche schon bekannt ist.

Für einen Wechsel der Kette vom kleineren zum größeren Ritzel zum Zweck des Gangumschaltens sind an den Zähnen am größeren Ritzel radial geneigte Schrägen vorgesehen, durch deren Wirkung die Kette immer wieder an diesen Zähnen des sich drehenden größeren Ritzels abgleitet und nicht axial hin zum größeren Ritzel verlagert werden kann. Diese Schrägen sind somit ein absolut sicher wirkendes Mittel zur Umschaltunterstützung, um eine an bestimmten Umfangspositionen nicht gewollte Verlagerung der Kettenglieder in einer Richtung parallel zur Drehachse des Ritzels hin zum größeren Ritzel zu vermeiden.

Bei einem Wechsel vom größeren zum kleineren Ritzel gibt es ein derartiges, absolut sicher wirkendes Mittel zur Umschaltunterstützung nicht. Vielmehr können die Kettenglieder an ganz beliebigen Umfangspositionen am größeren Ritzel außer Eingriff geraten, wenn während eines Umschaltvorganges die ablenkenden Kräfte durch das hintere Kettenschaltwerk nur groß genug sind.

Somit ergeben sich weitere Ansatzpunkte für eine Weiterentwicklung der Rollenketten für Fahrräder aus den immer weiter gesteigerten Anforderungen bezüglich des Umschaltens von einem größeren Ritzel zu einem kleineren Ritzel am Hinterrad des Fahrrades. Insbesondere wird dabei angestrebt, diesen Wechsel gesteuert nur an bestimmten Umfangspositionen am größeren Ritzel vornehmen zu lassen, an denen die wechselnde Kette auch am kleineren Ritzel sofort wieder in die Ritzelzähne eingreifen kann, ohne am kleineren Ritzel erst über die Zahnköpfe zu laufen.

Zu diesem Zweck werden an ausgewählten Zähnen am größeren Ritzel in Umfangsrichtung geneigte Anschrägungen vorgesehen, um eine Passage eines Innenlaschengliedes seitlich an diesem Zahn vorbei zu ermöglichen, wie das in der DE 4330989 gezeigt ist.

Als ein weiteres Mittel zum tendenziellen Vermeiden eines Außer-Eingriff-Kommens der Kette am größeren Ritzel hat sich als wirksam erwiesen, die Ritzelzähne in einer größeren Dicke auszubilden, die den Zwischenraum zwischen einem Paar von Innenlaschen nahezu vollkommen ausfüllen. Damit verringert sich die Möglichkeit der Kettenglieder zu einer Verschiebung quer zu den Ritzelzähnen, in einer Richtung parallel zur Achse des Kettenbolzens. Ergänzt wird diese Maßnahme durch das Verwenden einer Kette, bei der die Innenlaschen gegenüber den Kettenrollen vorstehen. Dieser Aspekt ist in der EP 2 141 069 angesprochen.

Insgesamt haben diese Fasen an den Innenseiten der Kettenlaschen, an der sich bei modernen Ketten auch ein Kragen als Lagerbasis für die Kettenrolle befindet, an sich widersprechenden Bedingungen zu genügen.

Einerseits sollte die in radialer Richtung reichende Höhe der Fase klein sein, damit die über die Kettenrolle überstehende Innenseite der Innenlasche bis zu einer möglichst großen radialen Höhe zur Führung zwischen Ritzelzahn und Ketteninnenlasche zur Verfügung steht. Das ergibt eine Forderung nach einem großen Fasenwinkel zwischen der Fase und der durch die Innenlaschen-Innenseite gebildeten Ebene.

Andererseits sollte die Fase einen kleinen Fasenwinkel bilden, damit der Verschleiß gering bleibt. Erfindungsgemäß wurde ein Fasenwinkel gewählt, der einen geringen Verschleiß ergibt.

Die Figuren 1 bis 6 zeigen Details einer bekannten Kette, die das Umfeld für den Einsatz der erfindungsgemäßen Innenlasche zeigen beziehungsweise auch bei der erfindungsgemäßen Innenlasche für eine Rollenkette zur Anwendung kommen.
- Fig. 1: zeigt die Außenseite einer Außenlasche
- Fig. 2: zeigt die Innenseite einer Außenlasche
- Fig. 3: zeigt die Außenseite einer Innenlasche
- Fig. 4: zeigt die Innenseite einer Innenlasche
- Fig. 5: zeigt einen Kettenabschnitt mit Innen- und Außenlaschen.
- Fig. 6: zeigt einen Ausschnitt aus Kette und Kettenrad beim Schaltvorgang
- Fig. 7: zeigt eine erfindungsgemäße Innenlasche einer Rollenkette in perspektivischer Ansicht, betrachtet von der Innenseite der Kette.
- Fig. 8: zeigt die Innenseite einer erfindungsgemäßen Innenlasche einer Rollenkette bei Betrachtung in einer Richtung parallel zu den Mittelachsen der Lochungen in den Endbereichen.
- Fig. 9: zeigt eine Schnitt-Ansicht bei einem Schnitt entsprechend der Linie "A-A" in der Fig. 8, die quer durch den Verbindungsbereich verläuft.
- Fig. 10: zeigt eine Schnitt-Ansicht bei einem Schnitt entsprechend der Linie "B-B" in der Fig. 8, die der Symmetrie-Ebene in Längsrichtung entspricht und durch die zwei Mittelachsen der Lochungen verläuft.
- Fig. 11: zeigt einen Schnitt durch die Mittelachse eines Kettenbolzens der erfindungsgemäßen Rollenkette mit durchgehend hohlem Bolzen, und zwar mit einer Gegenüberstellung der Form der Bolzenenden vor und nach der Umformoperation durch ein ebenes Werkzeug.
- Fig. 12: zeigt die erfindungsgemäße Fase an der Innenseite der Innenlasche, die einen Fasenwinkel aufweist, der 36 bis 41 Grad groß ist.

- Fig. 13: zeigt die in Hinsicht auf geringen Verschleiß optimierte Fase an der Innenseite der erfindungsgemäßen Innenlasche gemäß Fig. 12.

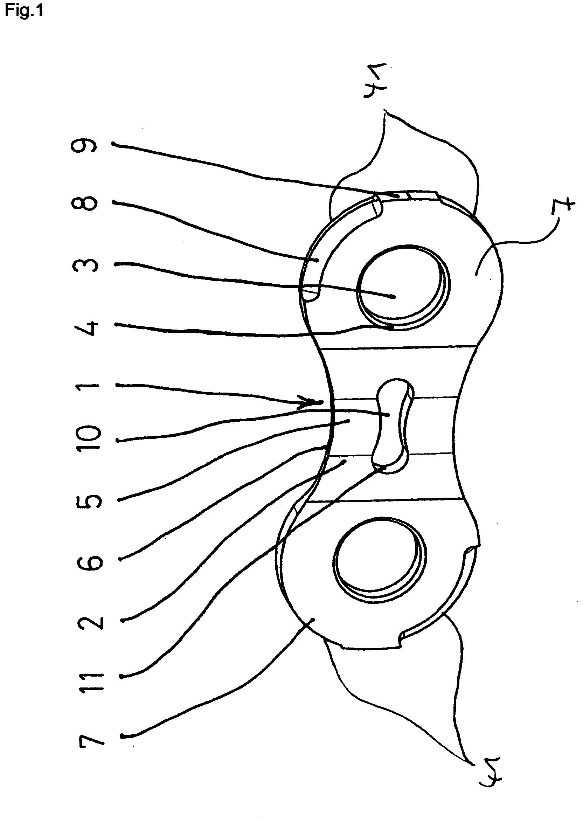

In Fig. 1 wird die Außenlaschen-Außenseite 5 einer Außenlasche 1 mit einem Verbindungsbereich 2 und zwei Ringbereichen 7 gezeigt. Der Verbindungsbereich 2 ist optional nach außen ausgebaucht. Zur Aufnahme der nicht dargestellten Kettenbolzen 18 verfügt jeder Ringbereich 7 über eine Lochung 3, die jeweils mit einer Bolzenend-Anprägung 4 ausgestattet ist. Jede der Bolzenend-Anprägungen 4 weist eine nach außen hin trichterförmige Aufweitung auf, in der ein nicht dargestelltes, verdicktes Bolzenende formschlüssig aufgenommen werden kann.

Die Kontur der Außenlasche 1 ist gerundet und wird von konkaven Randabschnitten 6 am Verbindungsbereich 2 und konvexen Randabschnitten 41 an den Ringbereichen 7 gebildet. Die konvexen Randabschnitte 41 sind in der Figur 1 rechts oben und links unten jeweils mit einer Außenlaschen-Abweisefase 8 ausgestattet, die sich über einen Winkelbereich von etwa 90° erstrecken und vor den Laschenenden 9 auslaufen. Im Verbindungsbereich 2 befindet sich zur Gewichtsreduzierung eine Öffnung 10 mit gerundeten Enden 11, die bei der erfindungsgemäßen Kette nur optional vorhanden ist.

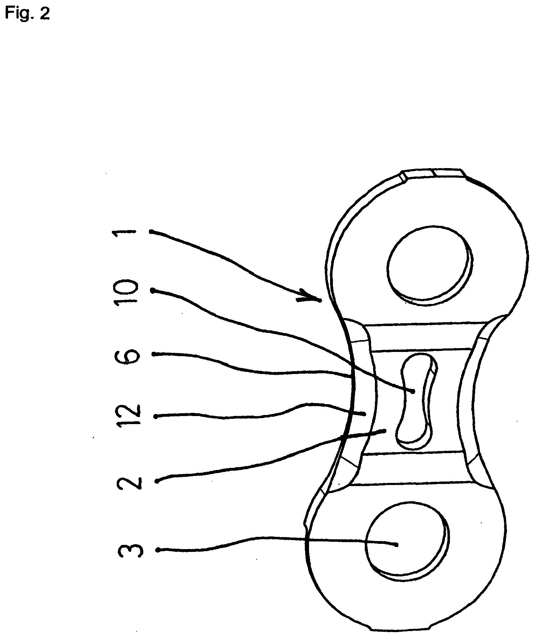

Fig. 2 zeigt die Innenseite einer Außenlasche 1 mit den Lochungen 3 sowie mit der optionalen Öffnung 10. Die konkaven Randabschnitte 6 sind jeweils mit einer Außenlasche-Fangfase 12 ausgestattet, die sich in Längsrichtung über den Verbindungsbereich 2 erstreckt.

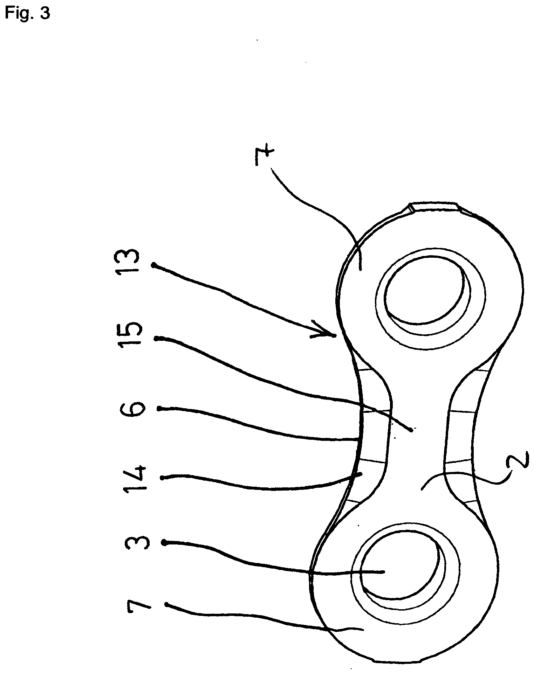

In Fig. 3 wird die Innenlaschen-Außenseite 15 mit zwei Lochungen 3 zur Aufnahme von nicht dargestellten Kettenbolzen 18 gezeigt. Die konkaven Randabschnitte 6 am Verbindungsabschnitt 2 sind mit relativ breiten optionalen Innenlaschen-Abweisefasen 14 ausgestattet. Die konvexen Randabschnitte 41 sind nicht angefast.

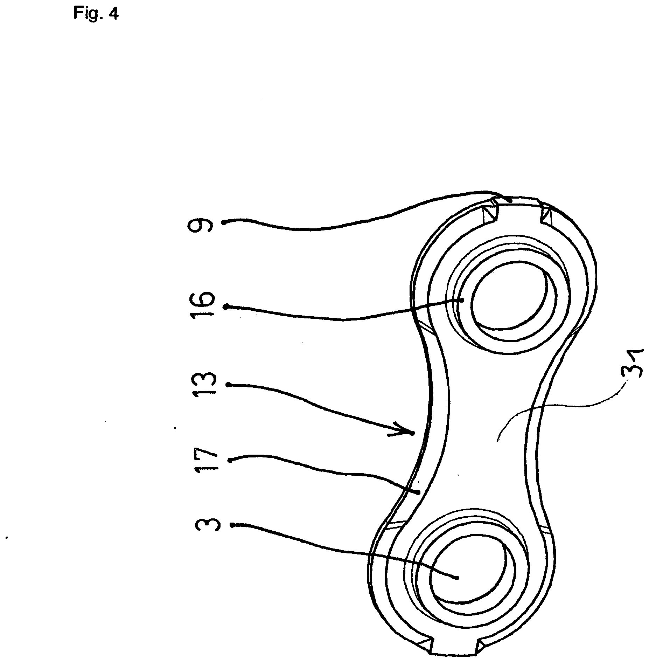

Fig. 4 zeigt die Innenlaschen-Innenseite 31 einer Innenlasche 13 mit den beiden Lochungen 3. Diese Lochungen 3 sind zur Aufnahme der nicht dargestellten Kettenrollen 20 jeweils mit rohrförmigen Kragen 16 eingefasst. Die konkaven Randabschnitte 6 und konvexen Randabschnitte 41 weisen mit Ausnahme des Laschenendes 9 eine umlaufende Innenlaschen-Fangfase 17 auf.

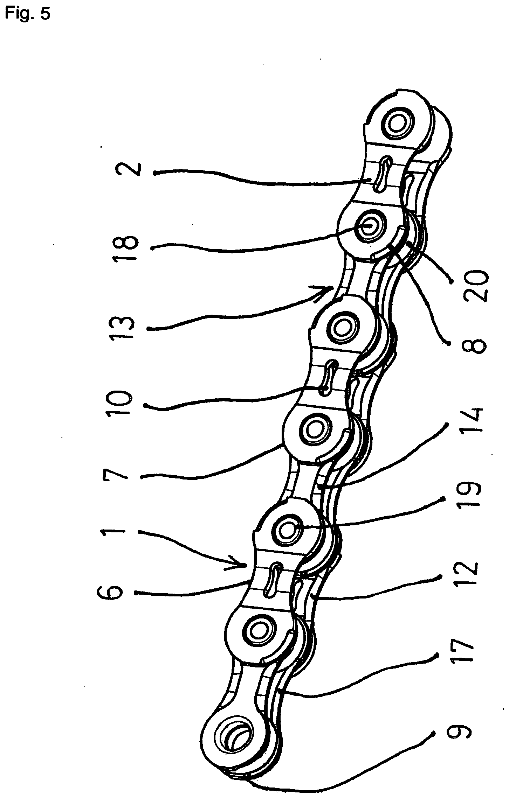

In Fig. 5 ist ein Kettenabschnitt mit den Außenlaschen 1 und den Innenlaschen 13 dargestellt. Die Kettenlaschen werden mittels Kettenbolzen 18 gelenkig verbunden. Die Bolzenenden 19 der Kettenbolzen 18 ragen in axialer Richtung nicht über die Bolzenend-Anprägungen 4 der Außenlaschen 1 hinaus. Die Außenlaschen 1 haben an den Innenseiten im Verbindungsbereich 2 Außenlaschen-Fangfasen 12 und an den Außenseiten Außenlaschen-Abweisefasen 8. Jedem Kettenbolzen 18 ist eine Kettenrolle 20 zugeordnet.

Die Innenlaschen-Abweisefasen 14 sichern beim Umlegen der Kette auf ein benachbartes Kettenrad ab, dass beide Innenlaschen seitlich einen Zahn passieren und nicht auf dem Zahn aufreiten.

Die Innenlaschen-Fangfasen 17 an den Innenseiten der Innenlaschen dienen dazu, eine Trichterform einer möglichst großen lichten Weite für die eingreifenden Zähne auszubilden. Die Gestaltung dieser Innenlaschen-Fangfasen 17 ist der wichtigste Bestandteil der erfindungsgemäßen Innenlaschen 13.

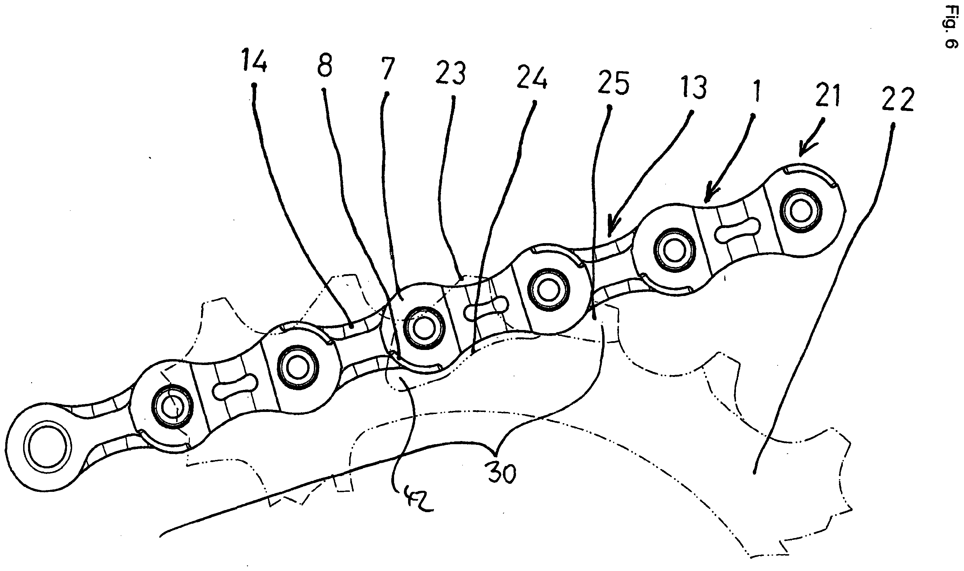

Fig. 6 zeigt einen Abschnitt der Kette 21 und von einem größeren Kettenrad 22 beim Schaltvorgang vom nicht dargestellten kleineren Kettenrades hin zum größeren Kettenrad 22, das sich im Gegenuhrzeigersinn dreht. Der Ketten-Wechselabschnitt 30 erstreckt sich tangential vom kleineren Kettenrad weg hin zum größeren Kettenrad 22.

Die Kette 21 ist in der Außenansicht dargestellt. Das schematisch, mit strichpunktierten Linien dargestellte größere Kettenrad 22 kann ein vorderes Kettenrad an einer Tretkurbel oder ein hinteres Ritzel am Hinterrad sein.

Für den Fall, dass das größere Kettenrad ein vorderes Kettenrad an einer Tretkurbel ist, ist die Kette 21 dem Betrachter zugewandt, und das größere Kettenrad 22 liegt dahinter.

Für den Fall, dass das größere Kettenrad ein hinteres Ritzel am Hinterrad ist, ist das größere Kettenrad 22 dem Betrachter zugewandt, und die Kette 21 liegt dahinter. Am größeren Kettenrad 22 sind ein Abweisezahn 23 mit einer Einprägung 42 und ein Fangzahn 25 erkennbar.

Diese Ansicht verdeutlicht die Funktion der Außenlaschen-Abweisefase 8 beim Zusammenwirken von Kette 21 und hinterem Mehrfachritzel und zeigt, wie die Außenlasche 1 beim Schalten hin zum größeren Kettenrad 22, an der Flanke des seitlich ausgesparten Abweisezahnes 23 entlang in Richtung eines Einprägungs-Randes 24 gleiten kann. Die Außenlaschen-Abweisefase 8 am konvexen Randabschnitt 41 verhindert, dass die Außenlasche 1 mit dem linken, unteren Rand am seitlich nicht ausgesparten Zahngrund hängen bleibt. Der nicht angefaste, rechte untere Rand der Außenlasche 1 soll sich am Zahngrund des Folgezahnes 25 abstützen und dabei die Kette 21 auf das Niveau des größeren Kettenrades 22 bringen.

Die mit der Abweisfase 14 ausgestattete Innenlasche 13 wird zwar vom Folgezahn 25 abgewiesen, aber die nachfolgende Außenlasche 1 gelangt nun über den nächsten Zahn und beendet damit erfolgreich diesen Schaltvorgang.

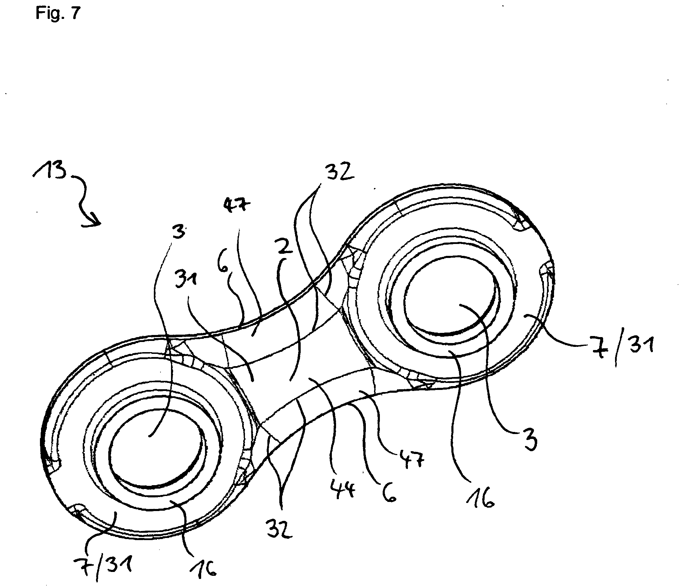

Figur 7 zeigt eine erfindungsgemäße Innenlasche 13 mit den zwei Ringbereichen 7 und dem taillierten Verbindungsbereich 2, der zwei konkave Randabschnitte 6 aufweist. Zentral in den Ringbereichen 7 sind Lochungen 3 gezeigt, die von Kragen 16 eingefasst sind. Die peripheren zylinderförmigen Außenflächen der Kragen 16 stellen die Lagerbasis für die nicht dargestellten Kettenrollen 20 dar. Die nicht sichtbare Außenfläche 5 der Innenlasche 13 ist eben ausgebildet.

Die Innenlasche wird aus einem ebenen Ausgangsmaterial hergestellt. Die ursprüngliche Materialdicke findet sich lediglich noch radial außerhalb im Anschluss an die Kragen 16. Im Verbindungsbereich 2 ist an der die Innenlaschen-Innenseite 31 von der ursprünglichen Materialdicke etwas weggenommen.

Auf der Innenlaschen-Innenseite 31 im Verbindungsbereich befinden sich mehrere gekrümmte Flächen, die ineinander übergehen. Dabei ist ein tangentialer Übergang zwischen den gekrümmten Teilflächen besonders vorteilhaft, weil sich dann keine Kanten an den Übergangsstellen befinden. Kanten wirken beim Eintauchen von nicht dargestellten Zähnen wie kleine Schneiden eines kleinen Werkzeuges mit der Tendenz zum Abtrag von Materialbestandteilen an Teilen, die über diese Kante gleiten.

Die in der Figur 7 gezeigten Trennungslinien 32 stellen Übergänge zwischen angrenzenden gekrümmten Flächenbereichen dar, aber keine Kanten.

Bei bisher bekannten Innenlaschen wurde auf kompliziertere Konturen an der Innenlasche verzichtet. Es wurden einfache geometrische Formen gewählt, die bei der Herstellung von Umformwerkzeugen geringere Anforderungen nach sich zogen und die sich auch wirkungsvoller mit einfachen Mess- und Prüfmitteln auf ihre Maßhaltigkeit überprüfen ließen. Diese Vorteile wurden im Zusammenhang mit der erfindungsgemäßen Innenlasche 13 aufgegeben.

Es ist auch denkbar, die beschriebene Anordnung von durchweg gekrümmten Teilflächen 44, 47 abzuwandeln. So könnte eine symmetrisch zum konkaven Randabschnitt 6 angeordnete erste Teilfläche 44 auch als ebene Fläche mit einem gegen Unendlich gehenden Krümmungsradius ausgebildet werden. In einer weiteren Abwandlung könnten die sich unmittelbar an den konkaven Randabschnitt 6 anschließenden zweiten Teilflächen 47 in den Richtungen senkrecht zum konkaven Randabschnitt 6 einen gegen Unendlich gehenden Krümmungsradius aufweisen.

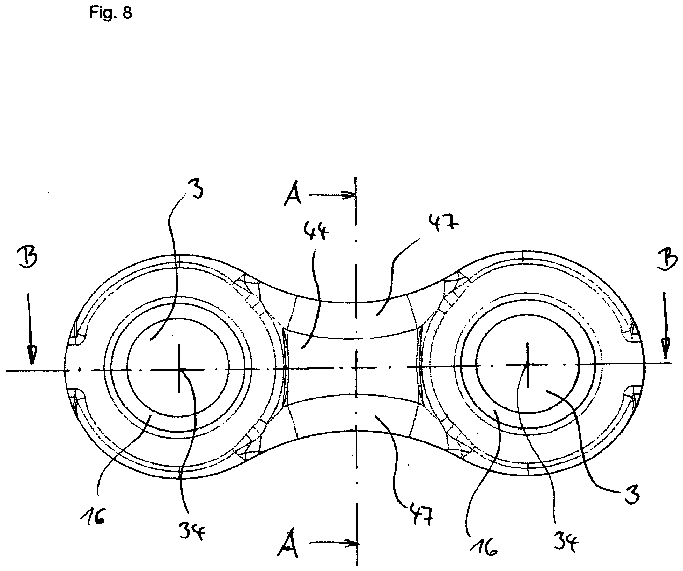

Die Figur 8 zeigt ebenfalls die erfindungsgemäße Innenlasche, betrachtet parallel zu den Achsen der zylindrischen Innenflächen innerhalb der Kragen.

Es sind der Schnittverlauf A-A durch die Symmetrie-Ebene zwischen den Lochungen 3 und der Schnittverlauf B-B durch die Mittelachsen 34 der zylinderförmigen Innenflächen an den Kragen 16 ersichtlich.

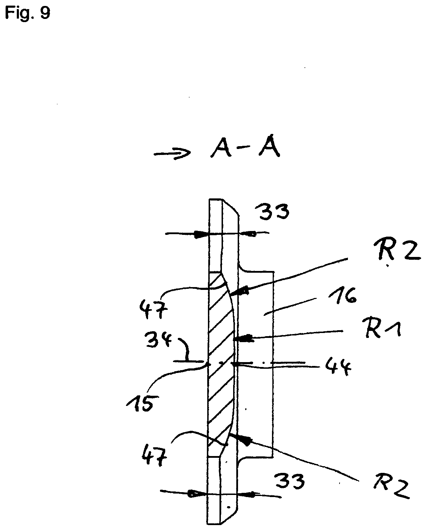

Die Figur 9 zeigt eine Schnittansicht beim Schnitt A-A durch die Symmetrie-Ebene zwischen den Lochungen 3.

Die links erkennbare Außenlaschen-Außenfläche 5 ist eben. Die rechte Berandung der wie üblich schraffiert dargestellten Schnittfläche ist gekrümmt, wobei eine erste gekrümmte Teilfläche 44 einen größeren Krümmungsradius beziehungsweise eine kleinere Krümmung aufweist. Die sich daran in einem tangentialen Übergang nach oben und nach unten anschließenden Randbereiche 43 weisen eine größere Krümmung beziehungsweise einen kleineren Krümmungsradius auf.

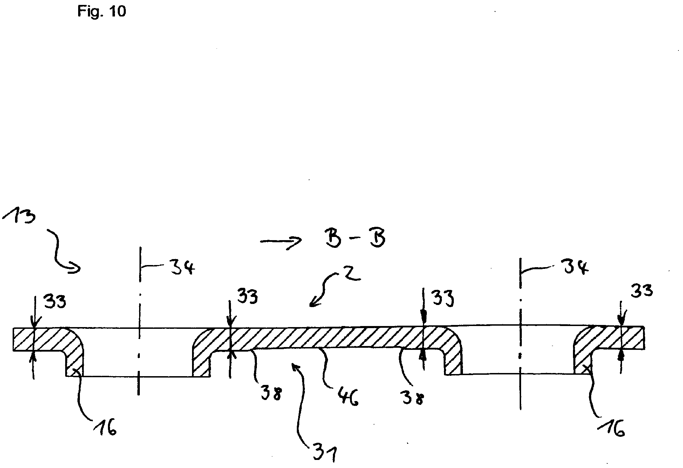

Die Figur 10 zeigt eine Schnittansicht bei einem Schnitt B-B durch die Mittelachsen 34 der zylinderförmigen Innenflächen an den Kragen 16.

Es ist erkennbar, dass im Verbindungsbereich 2 an der die Innenseite 31 der Innenlasche 13 von der ursprünglichen Materialdicke 33 etwas weggenommen ist, wodurch eine Aussparung 46 entsteht. Das heißt, die Fläche ist zurückgesetzt, es gibt sich eine Stufe 38.

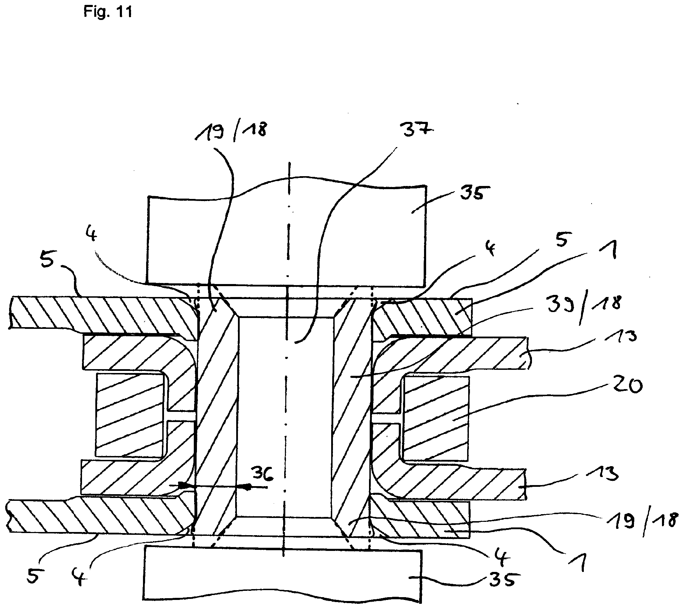

Die Figur 11 zeigt einen Schnitt durch die Mittelachse eines Kettenbolzens der erfindungsgemäßen Rollenkette mit einer Gegenüberstellung der Formgebung der Bolzenenden 19 vor und nach der Umformoperation durch ein ebenes Werkzeug 35. Dabei entspricht die gestrichelte Linie dem Zustand vor der Umformoperation.

Der Kettenbolzen 18 ist als Hohlbolzen mit durchgehender Bohrung 37 ausgebildet. Hin zu den Bolzenenden 19 reduziert sich die Wandstärke 36 des Hohlbolzens, durch eine konische Aufweitung der Bohrung 37, wobei die Außenfläche des Kettenbolzens 18 eine zylindrische Fläche ist. Dadurch ist eine Mittellinie zwischen der zylindrischen Außenfläche des Kettenbolzens 18 einerseits und der konischen Aufweitung der Bohrung 37 andererseits gegenüber der Mittelachse 34 der Lochung zum Bolzenende 19 hin nach radial außen geneigt, wodurch die Wandung in der Schnittansicht wie schiefstehend erscheint.

Bei einer Einwirkung einer Kraft parallel zur Mittelachse 34 der Lochung 3 durch ein ebenes Werkzeug 35 auf die Bolzenenden 19 hat die schiefstehend erscheinende Wandung die Tendenz, nach radial außen auszuweichen, sich entsprechend plastisch zu verformen und einen umlaufenden Vorsprung als Anschlag in Hinsicht auf eine Bewegung des Kettenbolzens gegenüber der Außenlasche zu bilden. Genügend Raum ist dem umlaufenden Vorsprung dadurch gegeben, dass an der Außenlaschen-Außenseite 5 am Austritt der Lochung 3 eine Fase vorgesehen ist und eine Bolzenend-Anprägung 4 bildet.

Ein ähnliches Verhalten ist schon für den Fall eines massiven Kettenbolzens mit rohrförmigen Bolzenenden bekannt. In diesem Fall verfügt der massive Mittelteil des Kettenbolzens über eine ausreichende Festigkeit, um sich bei der Einwirkung des ebenen Werkzeuges auf die Bolzenenden nicht plastisch zu verformen. Dementsprechend wird gewährleistet, dass sich die Kettenbolzen im massiven Mittelteil nicht verformen und sich letztendlich ein genau definierter Abstand zwischen den Außenlaschen ergibt. Dieser Abstand ist entscheidend für die seitliche Beweglichkeit zwischen den Kettengliedern infolge des vorhandenes Spiels zwischen den von einem Bolzenende hin zum anderen Bolzenende aufgereihten Elementen der Kette, nämlich den beiden Außenlaschen, den beiden Innenlaschen und der Kettenrolle.

Im Fall eines Kettenbolzens 18 mit durchgängiger Bohrung 37 sind die Verhältnisse wesentlich komplizierter, weil der sich an die Bolzenenden 19 anschließende Mittelteil 39 der Bolzen schon bei der Einwirkung einer kleineren axialen Kraft durch ein Werkzeug 35 dazu neigt, sich plastisch zu verformen. Der nur geringe Unterschied in Hinsicht auf die erforderliche axiale Kraft für das Umformen des rohrförmigen Bolzenendes 19 einerseits und des rohrförmigen Mittelteils 39 andererseits steht dem sicheren Einstellen der beschriebenen seitlichen Beweglichkeit entgegen.

Es hat sich aber gezeigt, dass beim Berücksichtigen beziehungsweise Einrechnen der beim Einwirken der Werkzeuge 35 eintretenden plastischen Verkürzung des Kettenbolzens mit durchgängiger Bohrung 37 gelingen kann, die seitliche Beweglichkeit der Kette entsprechend der Anforderungen einzustellen. Damit wird dann möglich, die Bolzenenden mittels ebener Werkzeuge 35 so umzuformen, dass sie nicht über die Außenlaschen-Außenseite 5 vorstehen, was ein Erfordernis bei immer enger in axialer Richtung aufgereihten Ritzeln ist.

Dabei kann bei alternativen Verfahren der Umformvorgang mittels eines ebenen Werkzeuges 35 durch einen oder mehrere zusätzliche Prozess-Schritte ergänzt werden, bei denen als Kegelstumpf oder als Kegel ausgebildete Werkzeuge mit entsprechender Kraft axial in die Bohrung 37 eingepresst werden. Die Kegelwinkel können dabei einen unterschiedlich großen Wert haben.

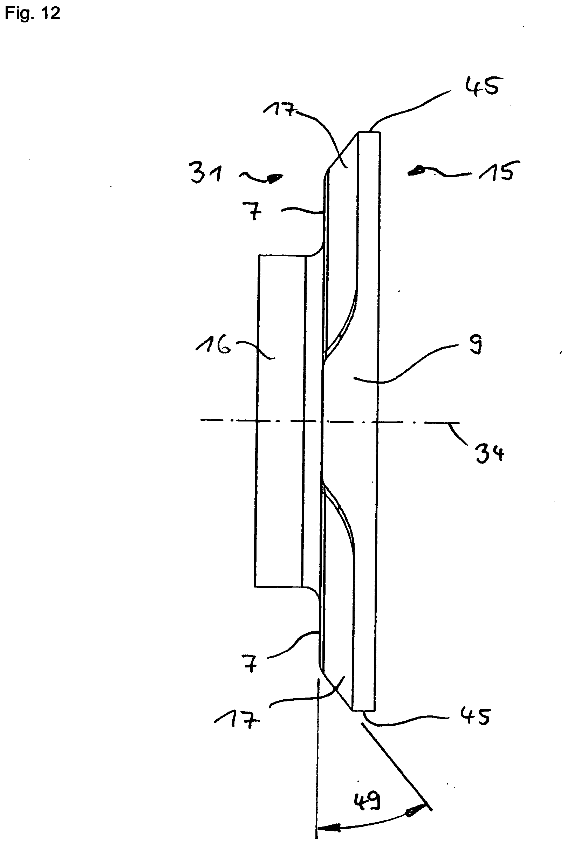

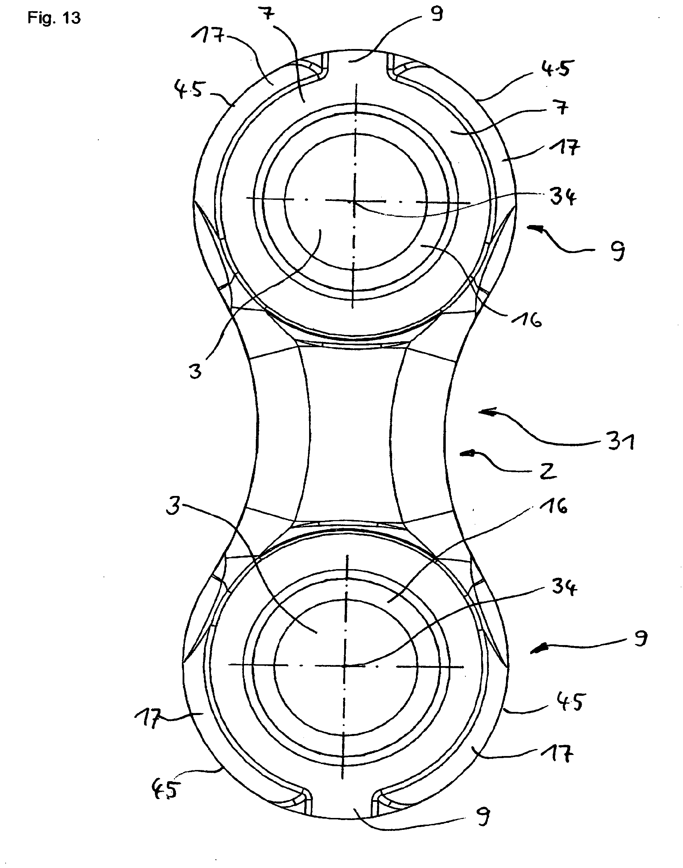

Fig. 12 in Verbindung mit Fig. 13 zeigt die Innenlaschen-Fangfase (17) an der Innenlaschen-Innenseite (31) im Bereich der Außenkontur (45) des konvexen Randabschnitts (41), die einen Fasenwinkel (49) zwischen der Innenlaschen-Fangfase (17) und dem Ringbereich (7) an der Innenlaschen-Innenseite (31) aufweist, der 36 bis 41 Grad groß ist.

Bei einem Fasenwinkel (49) von 36 bis 41 Grad ergeben sich besonders günstige Kontaktkräfte und es tritt vergleichsweise ein geringerer Verschleiß ein. Das gilt sowohl für das Eintauchen des Zahnes in den Raum zwischen einem Paar von Außenlaschen, als auch für den Vorgang, wenn sich der Ritzelzahn wieder aus dem Laschenzwischenraum radial im Verhältnis zur Drehachse des Ritzels heraus bewegt.

Während der Bewegung eines Ritzelzahnes aus dem Raum zwischen einem Paar von Außenlaschen besteht zumindest noch zeitweise Kontakt zwischen Ritzelzahn und Innenlaschen-Fangfase. Mit wachsendem Kettenschräglauf infolge des Versatzes erhöht sich die Tendenz zu einem Kontakt zwischen dem Ritzelzahn und der Innenlaschen-Fangfase (17). Weil ein Kontakt auch immer mit Verschleiß einhergehen kann, ergibt sich daraus ein Einfluss des Kettenschräglaufes auf den Verschleiß am Ritzelzahn.

Ein Fasenwinkel von 38 Grad hat sich als besonders günstig erwiesen, wobei die Außenkontur (45) zwischen Innenlaschen-Fangfase (17) und Innenlaschen-Außenseite (15) eine Erstreckung in Richtung parallel zur Mittelachse (34) von 0,3 Millimetern hat,

### Bezugszeichenliste

- 1: Außenlasche
- 2: Verbindungsbereich
- 3: Lochung
- 4: Bolzenend-Anprägung
- 5: Außenlaschen-Außenseite
- 6: konkaver Randabschnitt
- 7: Ringbereich
- 8: Außenlaschen-Abweisefase
- 9: Laschenende
- 10: Öffnung
- 11: gerundetes Ende
- 12: Außenlaschen-Fangfase
- 13: Innenlasche
- 14: Innenlaschen-Abweisefase
- 15: Innenlaschen-Außenseite
- 16: Kragen
- 17: Innenlaschen-Fangfase
- 18: Kettenbolzen
- 19: Bolzenende
- 20: Kettenrolle
- 21: Kette
- 22: größeres Kettenrad
- 23: Abweisezahn
- 24: Einprägungs-Rand
- 25: Fangzahn
- 30: Ketten-Wechselabschnitt
- 31: Innenlaschen-Innenseite
- 32: Trennungslinie
- 33: Materialdicke
- 34: Mittelachse
- 35: ebenes Werkzeug
- 36: Wandstärke
- 37: Bohrung
- 38: Stufe
- 39: Mittelteil
- 41: konvexer Randabschnitt
- 42: Einprägung
- 43: Randbereich
- 44: erste gekrümmte Teilfäche
- 45: Außenkontur
- 46: Aussparung
- 47: zweite gekrümmte Teilfläche
- 49: Fasenwinkel

## Patentansprüche

1. Ketteninnenlasche (13) für eine Rollenkette, aufweisend
- eine Innenseite (31) und eine Außenseite (15),
- zwei Enden (9) mit Ringbereichen (7) mit jeweils runder Außenkontur (45) und
- einem Verbindungsbereich (2), der die zwei Ringbereiche (7) verbindet,
- sowie zwei Kragen (16), von denen jeweils ein Kragen (16) auf der Innenseite (31) in unmittelbarer Nachbarschaft zu jedem der zwei Ringbereiche (7) angeordnet ist,
- wobei der Verbindungsbereich (2) der Innenseite (31) eine Aussparung (46) aufweist mit einer Materialstärke, die geringer ist als eine Materialstärke der Ringbereiche (7),
**dadurch gekennzeichnet,**
**dass** eine Oberfläche der Aussparung (46)
- eine erste gekrümmte Teilfläche (44) aufweist, die an
- eine ebene Teilfläche oder
- eine zweite gekrümmte Teilfläche angrenzt und
- die im Querschnitt gesehen mindestens einen tangentialen Übergang aufweist.

2. Ketteninnenlasche (13) für eine Rollenkette nach Anspruch 1,
**dadurch gekennzeichnet,**
**dass** die Oberfläche an der Innenseite (31) und eine Außenseite (15) der Ringbereiche (7), des Verbindungsbereiches sowie die Oberfläche der Kragen speziell gehärtet sind.

3. Rollenkette für ein Fahrrad, beinhaltend Außenlaschen, Kettenbolzen, Kettenrollen und Ketteninnenlaschen nach Anspruch 1,
wobei die Kettenbolzen (18) Bolzenenden (19) aufweisen, die nicht gegenüber einer Außenlaschen-Außenseite (5) vorstehen.

4. Rollenkette für ein Fahrrad, beinhaltend Außenlaschen, Kettenbolzen, Kettenrollen und Ketteninnenlaschen nach Anspruch 1,
Ketteninnenlasche (13) für eine Rollenkette nach Anspruch 1,
**dadurch gekennzeichnet,**
**dass** ein aus mehreren Verfahrensschritten bestehendes Verfahren zum Vernieten der Bolzenenden (19) mindestens einen Verfahrensschritt enthält, bei dem ein flaches Werkzeug benutzt wird, das in Richtung der Mittelachse (34) des Kettenbolzens (18) in Richtung zum Kettenbolzen (18) hin eine Kraft auf das Bolzenende (19) ausübt, wodurch das Bolzenende (19) nicht vorstehend gegenüber der Außenlaschen-Außenseite (5) umgeformt wird.

5. Ketteninnenlasche (13) für eine Rollenkette nach Anspruch 1,
**dadurch gekennzeichnet,**
**dass** die Oberfläche der Aussparung (46) eine erste gekrümmte Teilfläche (44) mit größerem Krümmungsradius R1 aufweist, die an sich mit einem tangentiellen Übergang beidseitig je eine zweite gekrümmte Teilfläche (47) mit einem kleineren Krümmungsradius R2 anschließt.

6. Ketteninnenlasche (13) für eine Rollenkette, aufweisend
- eine Innenlaschen-Innenseite (31) und eine Innenlaschen-Außenseite (15),
- zwei Enden (9) mit zwei Ringbereichen (7) mit jeweils runder Außenkontur (45) und einer zur Außenkontur (45) im Wesentlichen konzentrischen Lochung (3) und
- einem Verbindungsbereich (2), der die zwei Ringbereiche (7) verbindet sowie
- zwei Kragen (16), von denen jeweils ein Kragen (16) auf der Innenseite (31) in unmittelbarer Nachbarschaft zu jeweils einem der zwei Ringbereiche (7) angeordnet ist
- wobei zwischen der runden Außenkontur (45) des Ringbereiches (7) und dem Ringbereich (7) an der Innenlaschen-Innenseite (31) eine Innenlaschen-Fangfase (17) vorgesehen ist,
**dadurch gekennzeichnet,**
**dass** die Innenlaschen-Fangfase (17) gegenüber der Innenlaschen-Innenseite (31) des Ringbereiches (7) einen Fasenwinkel (49) einschließt, der 36 bis 41 Grad groß ist, besonders bevorzugt 38 Grad groß ist.

7. Ketteninnenlasche (13) für eine Rollenkette nach Anspruch 6,
**dadurch gekennzeichnet,**
**dass** die Außenkontur (45) zwischen Innenlaschen-Fangfase (17) und Innenlaschen-Außenseite (15) eine Erstreckung in Richtung parallel zur Mittelachse (34) der Lochung (3) von 0,3 Millimetern hat.

## Claims

1. Chain inner plate (13) for a roller chain, having
- an inner side (31) and an outer side (15),
- two ends (9) having annular regions (7) which each have a round outer contour (45), and
- a connection region (2), which connects the two annular regions (7),
- and two collars (16), of which in each case one collar (16) is arranged at the inner side (31) directly adjacent to each of the two annular regions (7),
- wherein the connection region (2) of the inner side (31) has a recess (46) having a material thickness which is smaller than a material thickness of the annular regions (7),
**characterized in that**
a surface of the recess (46)
- has a first curved part-face (44) which adjoins
- a planar part-face or
- a second curved part-face and
- which has at least one tangential transition when viewed in cross-section.

2. Chain inner plate (13) for a roller chain according to Claim 1,
**characterized in that**
the surface at the inner side (31) and an outer side (15) of the annular regions (7) of the connection region and the surface of the collars are specially hardened.

3. Roller chain for a bicycle, containing outer plates, chain pins, chain rollers and chain inner plates according to Claim 1,
wherein the chain pins (18) have pin ends (19) which do not protrude with respect to an outer plate outer side (5) .

4. Roller chain for a bicycle, containing outer plates, chain pins, chain rollers and chain inner plates according to Claim 1,
chain inner plate (13) for a roller chain according to Claim 1,
**characterized in that**
a method for riveting the pin ends (19) comprising a plurality of method steps contains at least one method step in which there is used a flat tool which applies a force to the pin end (19) in the direction of the centre axis (34) of the chain pin (18) in the direction towards the chain pin (18), whereby the pin end (19) is shaped so as not to protrude with respect to the outer plate outer side (5).

5. Chain inner plate (13) for a roller chain according to Claim 1,
**characterized in that**
the surface of the recess (46) has a first curved part-face (44) which has a larger radius of curvature R1 and which adjoins a second curved part-face (47) with a smaller radius of curvature R2 with a tangential transition at both sides.

6. Chain inner plate (13) for a roller chain, having
- an inner plate inner side (31) and an inner plate outer side (15),
- two ends (9) having two annular regions (7) which each have a round outer contour (45), and a hole (3) which is substantially concentric with respect to the outer contour (45) and
- a connection region (2), which connects the two annular regions (7), and
- two collars (16), of which in each case one collar (16) is arranged at the inner side (31) directly adjacent to in each case one of the two annular regions (7),
- wherein an inner plate catch chamfer (17) is provided between the round outer contour (45) of the annular region (7) and the annular region (7) on the inner plate inner side (31),
**characterized in that**
the inner plate catch chamfer (17) encloses a chamfer angle (49) of 36 to 41 degrees, particularly preferably 38 degrees, with the inner plate inner side (31) of the annular region (7).

7. Chain inner plate (13) for a roller chain according to Claim 6,
**characterized in that**
the outer contour (45) between inner plate catch chamfer (17) and inner plate outer side (15) has an extent in a direction parallel to the centre axis (34) of the hole (3) of 0.3 mm.

## Revendications

1. Plaque intérieure de chaîne (13) pour une chaîne à rouleaux, présentant
- un côté intérieur (31) et un côté extérieur (15),
- deux extrémités (9) dotées de régions annulaires (7) présentant respectivement un contour extérieur circulaire (45) et
- une région de liaison (2) qui relie les deux régions annulaires (7),
- ainsi que deux rebords (16), parmi lesquels respectivement un rebord (16) est disposé sur le côté intérieur (31) à proximité immédiate de chacune des deux régions annulaires (7),
- la région de liaison (2) du côté intérieur (31) présentant un évidement (46) doté d'une épaisseur de matériau qui est inférieure à une épaisseur de matériau des régions annulaires (7),
**caractérisée en ce**
**qu'**une surface de l'évidement (46)
- présente une première surface partielle incurvée (44) qui est adjacente à
- une surface partielle plane ou
- à une deuxième surface partielle incurvée et
- qui présente au moins une transition tangentielle vue en section transversale.

2. Plaque intérieure de chaîne (13) pour une chaîne à rouleaux selon la revendication 1,
**caractérisée en ce que**
la surface sur le côté intérieur (31) et un côté extérieur (15) des régions annulaire (7), de la région de liaison ainsi que la surface des rebords sont durcies spécialement.

3. Chaîne à rouleaux pour une bicyclette, comportant des plaques extérieures, des tourillons de chaîne, des rouleaux de chaîne et des plaques intérieures de chaîne selon la revendication 1,
les tourillons de chaîne (18) présentant des extrémités de tourillon (19) qui ne font pas saillie par rapport à un côté extérieur de plaque extérieure (5).

4. Chaîne à rouleaux pour une bicyclette, comportant des plaques extérieures, des tourillons de chaîne, des rouleaux de chaîne et des plaques intérieures de chaîne selon la revendication 1,
plaque intérieure de chaîne (13) pour une chaîne à rouleaux selon la revendication 1,
**caractérisées en ce**
**qu'**un procédé, constitué de plusieurs étapes de procédé, servant au rivetage des extrémités de tourillon (19) comporte au moins une étape de procédé dans laquelle un outil plat est utilisé, lequel exerce une force sur l'extrémité de tourillon (19) en direction de l'axe médian (34) du tourillon de chaîne (18) en direction du tourillon de chaîne (18), de sorte que l'extrémité de tourillon (19) soit déformée de manière à ne pas faire saillie par rapport au côté extérieur de plaque extérieure (5).

5. Plaque intérieure de chaîne (13) pour une chaîne à rouleaux selon la revendication 1,
**caractérisée en ce que**
la surface de l'évidement (46) présente une première surface partielle incurvée (44), présentant un rayon de courbure R1 plus grand, qui se raccorde par un rayon de courbure R2 plus petit à une deuxième surface partielle incurvée (47) par une transition tangentielle respectivement de part et d'autre.

6. Plaque intérieure de chaîne (13) pour une chaîne à rouleaux, présentant
- un côté intérieur de plaque intérieure (31) et un côté extérieur de plaque intérieure (15),
- deux extrémités (9) dotées de deux régions annulaires (7) présentant respectivement un contour extérieur circulaire (45) et une perforation (3) sensiblement concentrique par rapport au contour extérieur (45) et
- une région de liaison (2) qui relie les deux régions annulaires (7) ainsi que
- deux rebords (16), parmi lesquels respectivement un rebord (16) est disposé sur le côté intérieur (31) à proximité immédiate de respectivement l'une des deux régions annulaires (7)
- un biseau de retenue de plaque intérieure (17) étant prévu sur le côté intérieur de plaque intérieure (31) entre le contour extérieur circulaire (45) de la région annulaire(7) et la région annulaire (7),
**caractérisée en ce que**
le biseau de retenue de plaque intérieure (17) forme, par rapport au côté intérieur de plaque intérieure (31) de la région annulaire (7), un angle de biseau (49) qui est de 36 à 41 degrés, qui est de manière particulièrement préférée de 38 degrés.

7. Plaque intérieure de chaîne (13) pour une chaîne à rouleaux selon la revendication 6,
**caractérisée en ce que**
le contour extérieur (45) présente une étendue de 0,3 millimètre dans la direction parallèle à l'axe médian (34) de la perforation (3) entre le biseau de retenue de plaque intérieure (17) et le côté extérieur de plaque intérieure (15).
